Europäisches Patentamt

European Patent Office

Office européen des brevets

(11) Veröffentlichungsnummer: **0 338 438**
**A1**

## (12) EUROPÄISCHE PATENTANMELDUNG

(21) Anmeldenummer: 89106656.5

(22) Anmeldetag: 14.04.89

(51) Int. Cl.⁴: **B01J 20/16 , B09B 1/00 , B09B 3/00 , C04B 28/00**

(30) Priorität: 16.04.88 DE 3812705

(43) Veröffentlichungstag der Anmeldung:
25.10.89 Patentblatt 89/43

(84) Benannte Vertragsstaaten:
. AT CH DE FR GB LI NL

(71) Anmelder: CPM Ceramic Patent Management, Inc.
1001 Lee Boulevard, Suite 210 P.O. Box 151
Lehigh Acres Florida 33936(US)

(72) Erfinder: Mayr-Hoeffner, Harald
Regensburger Strasse 34
D-8440 Straubing(DE)

(74) Vertreter: Wasmeier, Alfons, Dipl.-Ing. et al
Postfach 382 Greflingerstrasse 7
D-8400 Regensburg(DE)

(54) **Verfahren zur Behandlung bzw. Aufbereitung von Ton oder tonigen Massen, Verfahren zum Entsorgen von Schadstoffen mittels Ton oder tonigen Massen, und Deponieabdichtung bzw. -auskleidung mittels Ton oder tonigen Massen.**

(57) Ton oder tonige Massen werden so behandelt bzw. aufbereitet, daß sie für die Abdichtung bzw. Auskleidung von Deponien geeignet sind oder daß sie zum Einschluß von Schadstoffen verwendet werden können. Eine absolut dichte, auslaugungsfreie Abdichtung bzw. Umkleidung wird dadurch erreicht, daß aus dem mit Wasser gemaukten Ton oder der tonigen Masse Kapillarwasser und Adhäsionswasser entzogen und dadurch die Oberfläche der Tonteilchen für die Aufnahme von fein verteilten Schadstoffen aktiviert wird.

EP 0 338 438 A1

## Verfahren zur Behandlung bzw. Aufbereitung von Ton oder tonigen Massen, Verfahren zum Entsorgen von Schadstoffen mittels Ton oder tonigen Massen, und Deponieabdichtung bzw. -auskleidung mittels Ton oder tonigen Massen

Die Erfindung betrifft ein Verfahren zum Behandeln bzw. Aufbereiten von Ton oder tonigen Massen für die Aufnahme von zu entsorgenden Schadstoffen, ein Verfahren zum Entsorgen von Schadstoffen mittels aufbereitetem Ton oder tonigen Massen sowie eine Deponieabdichtung bzw. - auskleidung mit Hilfe von nach den vorgenannten Verfahren hergestelltem Ton oder tonigen Massen.

Tone oder tonige Massen sind Sammelbezeichnungen für wasserhaltige Aluminiumsilikate mit Schichtgitteraufbau, die durch Verwitterung beispielsweise von Feldspat und Glimmer entstanden sind. Die Korngröße der Tonteilchen liegt normalerweise hauptsächlich im Bereich unter 0,002 mm; entsprechend beträgt die Gesamtoberfläche der Tonteilchen von 1 m³ Ton mindestens etwa l 500 000 m². Die Tonteilchen sind in der Regel negativ geladen. Das an den Tonteilchen haftende Adhäsionswasser und Kapillarwasser enthält positiv geladene Metallionen.

Werden das Kapillarwasser und das Adhäsionswasser ausgetrieben, kann die Oberfläche der Tonteilchen zur Aufnahme anderer Stoffe verwendet werden. Während das Kapillarwasser und ein Teil des Adhäsionswassers durch Wärme und/oder Druck, z.B. in Trocknern oder Filterpressen, entfernt werden kann, wobei die Temperatur bei einer entsprechenden Wärmebehandlung nicht zur Umwandlung der primären Tonstruktur führen darf, muß für das verbliebene Adhäsionswasser weitere Energie in der Größenordnung der Adhäsionsenergie schonend aufgebracht und das Wasser abtransportiert werden. Je vollständiger das Adhäsionswasser aus dem Ton entfernt wird, desto mehr Teilchenoberfläche wird aktiviert.

Es ist bereits bekannt, Deponien u.a. mit Hilfe von Tonschichten abzudichten. Wegen der hohen Kapillarität des Tones (bis 300 m), besteht jedoch die Gefahr, daß je nach den Umständen die Dichtungsschicht von Schadstoffen durchwandert wird, die Deponieabdichtung somit nicht ausreichend ist und dadurch unter Umständen unabsehbare Schäden im Grundwasser bzw. im Erdreich unterhalb der Deponie auftreten können.

Ebenfalls bekannt ist, für Abdichtungen von Deponien Dichtwandmassen entsprechend DE-OS 36 10 755 sowie DE-OS 36 33 736 zu verwenden. Sie bestehen aus einer Mischung von Bentonit und Zement oder aus einem hochquellfähigen Tonmineral, wie z.B. Bentonit, einem latent hydraulischen Bindemittel, wie z.B. Hochofenschlacke, und einem Hydroxylionen, insbesondere Calciumhydroxyd bildenden Anreger für die Hochofenschlacke. Den Dichtwandmassen ist gemeinsam, daß vorzugsweise hochquellfähige Na-Bentonite und nicht die vergleichsweise preiswerten und weit verbreiteten keramischen Tone auf Basis "Kaolinit und/oder Illit" verwendet werden. Derartige Massen zeigen eine deutliche Thixotropie und erhalten ihre Stabilität erst durch Erstarren und Abinden des beigemischten Zementes oder der latent hydraulischen Bindemittel, so daß eine Wartezeit bis zum Eintreten der Dichtwirkung erforderlich ist. Aber auch danach verhindern diese Dichtmassen den Austritt von Schadstoffen aus Deponien in das Grundwasser nicht zuverlässig, da sie eine restliche Wasserdurchlässigkeit aufweisen. Diese Wasserdurchlässigkeit beruht auf der bekannten Tatsache, daß Körper, die unter Verwendung von hydraulischen oder latent hydraulischen Bindemitteln hergestellt werden, eine mehr oder weniger große Porosität aufweisen.

Dieser Nachteil haftet auch dem in der AT-PS 374 380 beschriebenen Verfahren zur Bindung von Sonderabfällen mit unter Umweltbedingungen eluierbaren und emittierenden Anteilen an. Bei diesem Verfahren werden Sonderabfälle mit einem Bindemittel in Form von Kalkhydrat, Gips oder Zement bzw. zementartigen Produkten sowie mit Abbindewasser gemischt und anschließend in einen Deponierraum eingebracht. Nach dieser Lehre werden also neben hydraulischen und latent hydraulischen Bindemitteln wie Zement oder zementartigen Produkten auch Kalkhydrat und GIPS als Bindemittel vorgeschlagen, von denen dem Fachmann bekannt ist, daß sie ebenso wie die hydraulischen und latent hydraulischen Bindemittel nicht zu dichten, wasserundurchlässigen Körpern führen. Darüber hinaus ist bekannt, daß Kalkhydrat und Gips ihrerseits nicht dauerhaft beständig gegen Wasser und/oder wässerige Lösungen sind, so daß sie nur einen temporären Schutz gegen Auslaugung von Schadstoffen aus den eingebundenen Sonderabfällen bieten können.

Aufgabe der Erfindung ist es, Ton und tonige Massen so zu behandeln bzw. aufzubereiten, daß sie für die Abdichtung bzw. Auskleidung erhöhter Sicherheit von Deponien geeignet sind oder daß sie zur Bindung bzw. zum Einschluß von Schadstoffen verwendet werden können, und daß dabei eine absolut dichte, auslaugungsfreie Abdichtung bzw. Umkleidung entsteht.

Diese Aufgabe wird erfindungsgemäß mit den Merkmalen des Kennzeichens der Ansprüche 1 und 5 gelöst. Es hat sich überraschenderweise gezeigt, daß durch die Kombination dieser Merkmale eine absolut dichte, auslaugungssichere Bindung bzw. Abdichtung von Schadstoffen erzielt wird.

Weitere Ausgestaltungen der Erfindung sind Gegenstand der Unteransprüche.

Mit nach der Erfindung aufbereitetem bzw. behandeltem Aktivton können Schadstoffe in gesteinsähnliche Aggregate überführt und damit für die Endlagerung in Deponien geringerer Sicherheitsstufe aufbereitet und eingebracht werden bzw. Deponien mittels Aktivton abgedichtet werden. Durch das möglichst weitgehende Austreiben des Kapillarwassers und Adhäsionswassers ist die Oberfläche der aktivierten Tonteilchen zur Aufnahme von Schadstoffen und zur anschließenden Verfestigung zu gesteinsähnlichen Aggregaten, zur Verfesti gung von Ton als Dichtungsmittel sowie zur Durchführung eines künstlichen Diagenesevorganges, der später in den natürlichen Diagenesevorgang übergeht, geeignet.

Nachstehend wird die Erfindung anhand von Beispielen zur Herstellung von Aktivton und zur Einleitung der Diagenese von Aktiv-Schadstoff-Gemengen und deren Endlagerung erläutert.

Mit dem Kapillarwasser müssen die im Ton enthaltenen Salze und anderen löslichen Verunreinigungen entfernt werden, da diese andernfalls einen Teil der zu aktivierenden Oberfläche beanspruchen bzw. blockieren würden. Eine völlige Austrocknung des Tones wäre bereits aus diesem Grunde wenig geeignet. In Filterpressen können bis zu 95 % des Kapillarwassers entfernt werden. Die restlichen ca. 5 % Kapillarwasser sowie das Adhäsionswasser verbleiben im Tonmaterial.

Abhängig von dem mineralogischen Aufbau des Tones kann bei Temperaturen von 100° - 300° C das restliche (ca. 5 %) Kapillarwasser und ein Teil des Adhäsionswassers entfernt werden. Die anteilig im Ton verbleibenden Salze und Verunreinigungen müssen entweder in Kauf genommen oder durch andere Methoden beseitigt werden; z.B. können analog der "Hofmeister Serie" (H > Al > Ba > Sr > Mg > NH₄ > K > Na > Ti) die Chemie bestimmter Schadstoffe störende Ionen gezielt durch nicht störende ersetzt werden.

Um die Qualität des aufbereiteten Aktivtones weiter zu verbessern - es sind je nach Tonqualität noch ca. 10 - 40 % Adhäsionswasser vorhanden, insbesondere wenn Tonmengen großtechnisch verarbeitet werden - muß diese Restmenge an Adhäsionswasser durch elektrolytische Zersetzung, z.B. durch stromführende, langsam laufende Walzwerke, weitgehend entfernt und als Wasserstoff- und Sauerstoffgas ausgetrieben werden. Hierbei muß die angelegte elektrische Spannung aus wirtschaftlichen Gründen die erforderliche Zersetzungsspannung deutlich übersteigen.

Nach dieser Behandlung liegt der aufbereitete Aktivton in trockenen Bruchstücken vor. Diese Bruchstücke werden je nach der Qualität des Aktivtons und der anzulagernden getrockneten Stoffe im Verhältnis von 1 : 3 bis 3 : 1 in Mahlmischanlagen zu Staub mit einer maximalen Korngröße von ca. 0,063 mm gemahlen und innig vermengt. Die Staubfeinheit des Materials und die hierbei erzielbare Vermischung reicht für die Einleitung des Diagenesevorganges aus.

Diagenese bzw. die Verfestigung oder Versteinerung lockerer Sedimente zu festem Gestein tritt in der Natur durch Langzeiteinwirkung von Druck, Temperatur, chemischen Lösungsmitteln und chemischen Abscheidungen usw. ein. Durch Zugabe von Aktivton können Stäube technisch versteinert werden, da Aktivton aufgrund der großen Oberfläche und der elektrischen Ladung der Tonteilchen Ionen anlagern und soweit durch Druck und/oder Temperatur zu Gestein verfestigt werden kann, daß Wasser und andere Lösungsmittel nicht mehr in die Masse eindringen können.

Das Staubgemenge kann mit Hochdruck-Brikettierpressen verpreßt werden. Hierzu wird je nach der Konsistenz des Staubes Anmach- und Reaktionswasser (bis zu einem Anteil von einigen Prozent) beigemischt; diese Beimischung ist erforderlich, um die unterschiedlichen Staubteilchen miteinander zu verkleben, Adhäsionspunkte zwischen den Staubteilchen zu erzeugen, die unterschiedlichen Ionen aneinander anzuordnen und das Gemenge in einer Brikettierpresse verarbeiten zu können. Dieses Anmachwasser muß jedoch anschließend wieder entfernt oder gebunden werden.

Für den Versteinerungsvorgang ist das zugesetzte Anmach- und Reaktionswasser schädlich. Es muß deshalb eine der Wassermenge entsprechende Menge Kristallbildner, z.B. Zement, beigegeben werden, der nach der Hochdruckverpressung das Wasser fest ins Kristallgitter einlagert und somit bindet. Dabei entsteht ein künstlicher Stein mit hoher elektrostatischer Adhäsions- und Kristallgitterbindung. Zusätzlich kann hierbei auch ein Temperungsvorgang vorgesehen werden, der gegebenenfalls bis in den Bereich der Sinterung, oberhalb von ca. 950° C, zu führen ist.

Das Anmach- und Reaktionswasser kann auch durch Beigabe von mit Wasser reagierenden Stoffen, z.B. Aluminiumstaub, gebunden werden. Der durch Hochdruckverpressung entstandene Stein hält durch elektrostatische und Adhäsionsbindung. Der als Beispiel verwendete Aluminiumstaub reagiert mit dem Wasser zu korrosionsbeständigem Aluminiumoxyd, das als weiterer Schutzfaktor wirkt. Auch hierbei kann zusätzlich ein Temperungsvorgang vorgenommen werden.

Durch Tempern der Aktivton-Schadstoffbriketts kann das Anmach- und Reaktionswasser entfernt und der Ton teilweise oder ganz zu Ziegel umgeformt werden. Die zulässigen Temperaturen sind abhängig von den zu versteinernden Gemengen. Zum Austreiben des Wassers genügt eine Temperatur von 100 °C. Diese Temperatur ist aufgrund des Ausgasungsverhaltens der zu versteinernden Stäube nach oben begrenzt - z.B. begrenzt das Vorhandensein von Quecksilber die Temperatur auf 250 -300 °C. Ab etwa 200 °C entsteht jedoch aus den erfindungsgemäß zubereiteten Aktivton-Schadstoff-Aggregaten bereits ein künstliches Gestein, das die Schadstoffe auslaugungsfrei bindet bzw. einschließt. Sofern das Ausgasungsverhalten der zu versteinernden Stäube es zuläßt, können auch höhere Temperaturen bis in den Bereich der Sinterung, oberhalb von ca. 950 °C, angewandt werden.

Der Vorgang des Temperns kann bis zum Verklinkern der ganzen Briketts oder dessen Oberfläche durchgeführt werden, wenn die Bindung der jeweiligen Schadstoffe an die Tonteilchen so stark ist, daß sie nicht freigesetzt werden, oder dafür Sorge getragen ist, daß entweichende Schadstoffe zurückgehalten werden, sie z.B. in den Prozeß wieder zugeführt werden können. Dies kann z.B. bei Quecksilberverbindungen durch Kondensieren in Tonfiltern und Binden an Tongranulat geschehen.

Da Aktivton im Vergleich zu herkömmlichen Tonschichten hoher Kapillarität eine wesentlich höhere Packungsdichte besitzt, die durch das fehlende Adhäsionswasser bedingt ist, wird die Kapillarität entscheidend verringert. Etwa noch vorhandene Restporen können durch Beigabe von Kristallbildnern geschlossen werden.

Bei einem Beispiel für eine praktische Ausführungsform der Erfindung werden 30 cm Aktivtonschicht und 30 cm Aktivton-Zementschicht als Abdichtung bzw. Auskleidung einer Deponie verwendet, die sich durch unterschiedliches Zeitverhalten ergänzen. Während die Aktivtonschicht elastisch bleibt und erst durch den späteren Druck des Deponiegutes erhärtet, wird dies bei einem Einsatz einer Aktivton-Zementschicht bereits nach einigen Tagen erreicht.

Die mit Hilfe von Aktivton hergestellten Schadstoffbriketts können entweder mit Zement zu Beton (die Briketts können in einer zur Betonherstellung geeigneten Korngrößenverteilung hergestellt werden) verarbeitet und so in die Deponie gepumpt werden, oder aber sie werden zusammen mit Aktivton in die Deponie eingearbeitet. In beiden Fällen entsteht eine nicht nur von der Deponieabdichtung her dichte, sondern eine in sich dichte und auslaugungsfreie Deponiemasse.

Häufig treten Stäube mit hohem Anteil an wasserlöslichen Salzen auf, insbesondere z.B. bei der Kunststoffverbrennung oder Alt-Medikamentenvernichtung. Um zu verhindern, daß die Oberfläche der Briketts, soweit sie nicht zu Klinker gesintert werden, von Wasser angegriffen werden kann, wird vorgeschlagen, die Briketts mit einem zusätzlichen wasserabweisenden Überzug zu versehen, beispielsweise mit einem Erdölderivat, etwa Paraffin, einzusprühen.

Ein weiteres, spezielles Anwendungsgebiet vorliegender Erfindung betrifft z.B. die Anwendung des Verfahrens bzw. die Verwendung des Produktes nach der Erfindung zu Dammaufschüttungen und Wällen, beispielsweise für den Wasserschutz.

## Ansprüche

1. Verfahren zur Behandlung bzw. Aufbereitung von Ton oder tonigen Massen für die Aufnahme von zu entsorgenden Schadstoffen, **dadurch gekennzeichnet,** daß aus dem mit Wasser gemaukten Ton oder der tonigen Masse Kapillarwasser und Adhäsionswasser entzogen und dadurch die Oberfläche der Tonteilchen für die Aufnahme von fein verteilten Schadstoffen aktiviert wird.

2. Verfahren nach Anspruch 1, dadurch gekennzeichnet, daß das Kapillarwasser und die Salze sowie andere lösliche Verunreinigungen mit Hilfe von mechanischen Entwässerungseinrichtungen, wie z.B. Filterpressen, entfernt werden.

3. Verfahren nach Anspruch 1 oder 2, dadurch gekennzeichnet, daß das restliche Kapillarwasser und ein Teil des Adhäsionswassers durch Erwärmen auf 100° - 300 °C entfernt werden.

4. Verfahren nach Anspruch 3, dadurch gekennzeichnet, daß das restliche Adhäsionswasser durch elektrolytische Zersetzung in Form von Wasserstoff- und Sauerstoffgas entfernt wird.

5. Verfahren nach einem der Ansprüche 1 - 4, dadurch gekennzeichnet, daß der Aktivton und die Schadstoffe in Mahlmischanlagen zu Staub mit der Korngröße von ca. 0,063 mm gemahlen und innig vermengt werden, und daß das Staubgemenge zu einem künstlichen Gestein, vorzugsweise in Brikettform, verpreßt bzw. verdichtet wird.

6. Verfahren nach einem der Ansprüche 1 - 5, dadurch gekennzeichnet, daß dem aufbereiteten Gemenge Anmach- und Reaktionswasser beigemischt wird, daß ein dieses Wasser bindender Kristallbildner beigemischt wird, und daß das Gemenge anschließend verpreßt wird.

7. Verfahren nach einem der Ansprüche 1 - 5, dadurch gekennzeichnet, daß Anmach- und Reaktionswasser durch mit Wasser reagierende Stoffe gebunden wird.

8. Verfahren nach einem der Ansprüche 1 - 5, dadurch gekennzeichnet, daß das gepreßte Material getempert, gebrannt oder gesintert wird, wobei sich die Tempertemperatur nach dem Ausgasungsverhalten der Schadstoffe richtet und gegebenenfalls bis in den Sinterbereich, oberhalb ca. 950 °C, geführt werden kann.

9. Verfahren nach einem der Ansprüche 1 - 8, dadurch gekennzeichnet, daß bei Verwendung von Staub mit einem hohen Anteil an durch Wasser löslichen Stoffen, insbesondere in Form von Salzen, das Aktivton-Staub-Gemenge mit einer wasserabweisenden Schicht, insbesondere einem Erdölderivat, z.B. Paraffin, überzogen wird.

10. Verfahren nach einem der Ansprüche 1 - 9, dadurch gekennzeichnet, daß die Briketts mit Zement zu Beton verarbeitet und zur Auffüllung in Deponien eingebracht werden.

11. Verfahren nach einem der Ansprüche 1 - 5, dadurch gekennzeichnet, daß die Briketts mit reinem aufbereitetem Aktivton in Deponien eingebracht werden.

12. Deponieabdichtung bzw. -auskleidung mittels Ton oder tonigen Massen, dadurch gekennzeichnet, daß die Auskleidungsmasse aus nach einem der vorausgehenden Ansprüche hergestelltem Aktivton besteht.

13. Deponieabdichtung bzw. -auskleidung nach Anspruch 12, dadurch gekennzeichnet, daß der Aktivton mit Zement und Wasser zu Beton als Deponieauskleidung verarbeitet wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 612 381 (BLOCK) * Spalte 1, Zeilen 1-31 * | 1 | B 01 J 20/16 |
| A | --- | 5-8,11 | B 09 B 1/00 |
| Y | US-A-4 615 809 (KING) * Spalte 2, Zeilen 10-15; Spalte 14, Zeilen 6-19 * | 1 | B 09 B 3/00 C 04 B 28/00 |
| A | --- | 6,7,10 | |
| A | EP-A-0 130 854 (PICHAT) * Seite 1, Zeile 1 - Seite 2, Zeile 32 * | 1,10 | |
| A | US-A-4 149 968 (KUPIEC) --- | | |
| A | FR-A-2 462 396 (HANDELSKONTOR LUDDERT GRAF ZU MUNSTER) --- | | |
| A | FR-A-1 053 734 (SÜD-CHEMIE) * Seite 2, Zusammenfassung * --- | 1-3 | |
| A | US-A-3 244 635 (DUKE) * Spalte 3, Zeilen 27-37; Spalte 5, Zeilen 51-57 * --- | 1-3 | |
| A | DE-C- 597 716 (ATOM STUDIENGESELLSCHAFT FÜR ERZE, STEINE UND ERDEN) * Seite 2, Zeile 100 - Seite 3, Zeile 12 * ----- | 4 | |

| RECHERCHIERTE SACHGEBIETE (Int. Cl.4) |
|---|
| B 01 J B 09 B C 02 F |

Der vorliegende Recherchenbericht wurde für alle Patentansprüche erstellt

| Recherchenort | Abschlußdatum der Recherche | Prüfer |
|---|---|---|
| DEN HAAG | 08-08-1989 | WENDLING J.P. |